(19) Europäisches Patentamt
European Patent Office
Office européen des brevets

(11) **EP 4 435 658 A1**

(12) **EUROPEAN PATENT APPLICATION**

(43) Date of publication:
**25.09.2024 Bulletin 2024/39**

(21) Application number: **24162017.8**

(22) Date of filing: **07.03.2024**

(51) International Patent Classification (IPC):
**G06F 30/13** (2020.01)  **G06F 30/17** (2020.01)
**G06F 30/23** (2020.01)  **G06F 111/04** (2020.01)
**G06F 111/10** (2020.01)  **G06F 119/14** (2020.01)

(52) Cooperative Patent Classification (CPC):
**G06F 30/13; G06F 30/17; G06F 30/23;**
G06F 2111/04; G06F 2111/10; G06F 2119/14;
Y02T 90/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.03.2023 CN 202310274364**

(71) Applicant: **China Construction Fifth Engineering
Division
Corp., Ltd
Changsha, Hunan 410014 (CN)**

(72) Inventors:
• **Zhou, Quan**
  **Changsha, 410014 (CN)**
• **Chen, Xiange**
  **Changsha, 410014 (CN)**
• **Li, Shuisheng**
  **Changsha, 410014 (CN)**
• **Zhao, Lei**
  **Changsha, 410014 (CN)**
• **Rong, Jianhua**
  **Changsha, 410014 (CN)**
• **Cai, Jinhu**
  **Changsha, 410014 (CN)**

(74) Representative: **Ullrich & Naumann PartG mbB
Schneidmühlstrasse 21
69115 Heidelberg (DE)**

(54) **AN INTEGRATE TOPOLOGY AND SIZE OPTIMIZATION METHOD FOR FRAME STRUCTURE CONSIDERING ANTI-SEISMIC PERFORMANCE REQUIREMENTS**

(57) The present application discloses an integrate topology and size optimization method for a frame structure considering anti-seismic performance requirements, belonging to a technical field of a topology optimization for structure. The method constructs a topology optimization model of the frame structure with modal flexibility minimization as an objective function and meeting of volume constraint by considering the influences of structural branch mass and distributed inertial force,, and provides an integrate topology and size optimization method for frame structure considering anti-seismic performance requirements by combining a variant volume constraint solution and a moving asymptote optimization algorithm. The method can solve the problem of topology optimization issue of the frame structure under a basic seismic load and obtain a lightweight innovative design of the frame structure meeting anti-seismic performance requirement.

FIG. 1

EP 4 435 658 A1

**Description**

**TECHNICAL FIELD**

The present application relates to a technical field of a structure topology optimization, and in particular, relates to an integrate topology and size optimization method for a frame structure considering anti-seismic performance requirements.

**BACKGROUND ART**

Nowadays, topology optimization under refined safety guidelines has become an effective way to obtain an innovative design with specified performances in civil engineering, machinery and other fields. While most of related works were mainly focused on topology optimization with static performance requirements, which may prevent these designs from being a realistic one because of the dynamic requirements were ignored. Even though there were several researches devoting to performing topology optimization with dynamical characteristics such as frequency requirements, the structural safety and reliability under seismic loadings cannot be guaranteed due to the lack of anti-seismic performances.

The structural power spectral response under stationary Gaussian random excitations were usually taken as the objective or constraints to achieve an optimized design with specified anti-seismic performances. While the anti-seismic performances may not be accurately captured because of seismic loadings are far more complex than Gaussian random excitations. Even though the non-stationary random excitation method has been used to simulate dynamic seismic loads and employed in topology optimization, these works were limited to simple plane structures and the size of the members were not included. Furthermore, it's worth noting that the effects of the distributed mass inertia forces caused by structural weights should be included into optimization formula to achieve a realistic design with anti-seismic performance requirements.

As a result, in order to achieve a realistic design in civil engineering, the present application provides an integrate topology and size optimization method for frame structures, in which both the anti-seismic performance requirements and the effects of the distributed mass inertia forces are considered.

**SUMMARY**

The object of embodiment in the present application is to provide an integrate topology and size optimization method for frame structures considering anti-seismic performance requirements, which can solve the technical problems as described in the background art.

The presented application provides an integrate topology and size optimization method for frame structure considering anti-seismic performance requirements, which includes:

step 1, discretizing an initial three-dimensional design domain to hexahedral finite element meshes, and defining a beam member by defining a connection between any two different nodes and collinearity detection algorithm to form a three-dimensional frame structure without an overlapping member;

step 2, assigning sectional parameters, material properties and boundary conditions to each of beam elements in the three-dimensional frame structure, and performing a modal analysis to obtain an initial natural frequency and a corresponding initial mode shape of the three-dimensional frame structure;

step 3, creating node normalized variables to define a low-density member during optimization of the three-dimensional frame structure, and performing a pseudo-modal recognition and a deleting measure based on a modal strain energy to obtain an actual natural frequency and an actual mode shape of the three-dimensional frame structure;

step 4, utilizing the actual natural frequency and the actual mode shape obtained above to obtain an equivalent modal force with considering branch mass;

step 5, performing quasi-static finite element analysis on the three-dimensional frame structure to obtain a modal displacement vector of the three-dimensional frame structure, constructing a topology optimization model of the three-dimensional frame structure with modal flexibility minimization as an objective function and meeting of volume constraint, and constructing an equivalent topology optimization model with an active volume constraint by combining a variant volume constraint solution;

step 6, analyzing sensitivity of topology and size design variables of the modal flexibility, and optimizing and solving a defined optimization issue with a moving asymptote optimization algorithm; and

step 7, repeating steps 1 to 6 until a convergence criteria is met, and obtaining an optimal solution to obtain an optimal topology layout of frame structure members with considering the anti-seismic performance requirement.

In the embodiment, in step 1, discretizing the initial design domain into hexahedral finite element meshes, and defining a beam member by defining a connection between any two different nodes and collinearity detection algorithm includes:

performing a collinearity detection on a new member with a starting point at a node i and a previously determined member with a starting point at the node i coming from a same node, wherein, the new member has a direction vector of $D_{new}$, the previously determined member has a direction vector of $D_{old}$, and a dot product of the new member and the previously determined member is calculated with a following formula (1):

$$C = D_{old} D_{new}^{T} \qquad (1).$$

if the dot product of the new member and the previously determined member is equal to 1, determining that the new member is collinear with the previously determined member and abandoning the new member; wherein, in the determining of collinear, a collinear tolerance *ColTol* < 1 is used, and the new member is removed if a following collinear criterion formula (2) is satisfied:

$$C > ColTol \qquad (2).$$

in step 2, performing the modal analysis to obtain the initial natural frequencies and the corresponding initial mode shape of the three-dimensional frame structure includes:
performing the modal analysis by considering an influence of structural branch quantity to obtain the initial natural frequency and the corresponding initial mode shape of the three-dimensional frame structure.

In step 3, performing a pseudo-modal recognition and a deleting measure based on a modal strain energy to obtain an actual natural frequency and an actual mode shape of the three-dimensional frame structure includes:
performing the pseudo-modal recognition and the deleting measure based on a modal strain energy of a low-density region to obtain an actual natural frequency $\omega_j$ and an actual mode shape $\varphi_j$ in first $n_\omega$ orders of the three-dimensional frame structure, wherein $j = 1,2,\cdots,n_\omega$.

In an embodiment, in step 3, creating node normalized variables to define a low-density member during optimization of the three-dimensional frame structure includes:

assigning a normalized variable $\chi_j$ for each node of the three-dimensional frame structure, which is represented as

$$\chi_j = \frac{\sum_{k \in \boldsymbol{nb}} x_k}{n_e \sum_{i=1}^{n_e} x_i} \qquad (3)$$

where in, $\chi_j$ is a normalized variable for a $j$-th node, $x_i$ is a topology variable for a i-th member of the three-dimensional frame structure, $n_e$ is a number of members of the three-dimensional frame structure, $\boldsymbol{nb}$ is a set of members connected with the $j$-th node, and $x_k$ is a topology variable of a $k$-th member in the set $\boldsymbol{nb}$ ; a threshold $t$ is set such that, if the normalized variable for the $j$-th node meets $\chi_j < t \sum_{j=1}^{n} \chi_j$ , the $j$-th node is defined as a low-density node; and

the performing a pseudo-modal recognition and a deleting measure based on a modal strain energy to obtain an actual natural frequency and an actual mode shape of the three-dimensional frame structure includes:
identifying a mode with a ratio of the modal strain energy in the low-density region and a modal strain energy of a corresponding order greater than the threshold t as a pseudo-vibration mode, and removing the pseudo-vibration mode during a optimization process to obtain the actual natural frequency $\omega_j$ and the actual mode shape $\varphi_j$ in the first $n_\omega$ orders of the three-dimensional frame structure, wherein $j = 1,2,\cdots,n_\omega$.

In an embodiment, in step 4, the equivalent modal force $\boldsymbol{F}_j(t)$ is denoted as

$$F_j(t) = \Gamma_j M \varphi_j Sa(T_j) \qquad (4)$$

$$\Gamma_j = \frac{\varphi_j^{\mathrm{T}} M I}{\varphi_j^{\mathrm{T}} M \varphi_j}$$

where, $j$ is $j$-th order modal, $M$ is an overall stiffness matrix of the three-dimensional frame structure, is a mass standardized modal participation factor, $Sa(T_j)$ is an seismic acceleration response spectrum corresponding

$$T_j = \frac{2\pi}{\omega_j}$$

$$I = \left( \underbrace{1 \quad 0 \quad 0 \quad 0 \quad 0 \quad 0}_{u_i \quad v_i \quad w_i \quad \theta_{xi} \quad \theta_{yi} \quad \theta_{zi}} \quad \cdots \quad \underbrace{1 \quad 0 \quad 0 \quad 0 \quad 0 \quad 0}_{u_j \quad v_j \quad w_j \quad \theta_{xj} \quad \theta_{yj} \quad \theta_{zj}} \right)^{\mathrm{T}},$$

, $I$ is a position vector of load, and where $u_i$, $v_i$ and $w_i$ are displacements of an i-th node along $x$, $y$ and $z$ directions, respectively, and $u_j$, $v_j$ and $w_j$ are displacements of aj-th node along $x$, $y$ and $z$ directions, respectively; $\theta_{xi}$, $\theta_{yi}$, $\theta_{zi}$, $\theta_{xj}$, $\theta_{yj}$ and $\theta_{zj}$ correspond to rotation angles around $x$, $y$ and $z$ axes, respectively; and $T$ is a matrix transpose operator.

In an embodiment, in step 5, the performing quasi-static finite element analysis on the three-dimensional frame structure to obtain the modal displacement vector of the three-dimensional frame structure includes:

performing the quasi-static finite element analysis on the three-dimensional frame structure by utilizing the equivalent modal force $F_j(t)$ to obtain the modal displacement vector $U_j = K^{-1}F_j$, $j = 1,2,\cdots,n_\omega$ of the three-dimensional frame structure, wherein $K$ is an overall stiffness matrix of the three-dimensional frame structure;
modal flexibility contributed by the first $n_\omega$ orders of modals is denoted as

$$\Phi_{\mathrm{SMC}} = \sum_{j=1}^{n_\omega} F_j^{\mathrm{T}} U_j \qquad (5);$$

the equivalent topology optimization model is represented as

$$\begin{cases} \text{find} \quad x = \left[ x_1, x_2, \ldots \quad x_{n_e} \right]^{\mathrm{T}}, r = \left[ r_1, r_2, \ldots \quad r_{n_e} \right]^{\mathrm{T}} \\ \min_x \quad \Phi_{\mathrm{SMC}}(x,r) = \sum_{j=1}^{n_e} F_j^{\mathrm{T}}(\tilde{x},r) U_j(\tilde{x},r) \\ s.t. \quad \left( K - \omega_j^2 M \right) \varphi_j = 0 \\ V_1(x) = \sum_{e=1}^{n_e} f_v(\tilde{x}_e) \, v_e(r_e) / V^{(0)} - V_U^{(k)} \leq 0 \\ V_2(x) = -\sum_{e=1}^{n_e} f_v(\tilde{x}_e) \, v_e(r_e) / V^{(0)} + (1-\theta) V_U^{(k)} \leq 0 \\ 0 < x_{\min} \leq x_e \leq 1, r_{\min} \leq x_e \leq r_{\max} \end{cases} \qquad (6)$$

where $x = [x_1, x_2, \ldots x_{ne}]^{\mathrm{T}}$ and $r = [r_1, r_2, \ldots r_{ne}]^{\mathrm{T}}$ are the topology and size design variable vector of the three-dimensional frame structure, respectively. $\tilde{x}$ is a physical variable after Heaviside mapping, and $n_e$ is a number of the beam element in the structure; $\theta$ is a volume constraint relaxation parameter and $\theta = 0.004$, $V^{(0)}$ is a structural total volume of the three-dimensional frame structure before optimization, and $V_U^{(k)}$ is a target structural volume fraction limit for k-th iteration step, which is expressed as

$$V_U^{(k)} = \begin{cases} V^{(k-1)} - \min\left(\gamma, \left|V^* - V^{(k-1)}\right|\right), & V^{(k-1)} \geq V^* \\ V^{(k-1)} + \min\left(\gamma, \left|V^* - V^{(k-1)}\right|\right), & V^{(k-1)} < V^* \end{cases}, k = 1 \text{ or } k \in B \qquad (7)$$

$$V_U^{(k)} = \begin{cases} max\left(\left(V_U^{(k-1)} - \gamma\right), V^*\right), & V^{(k-1)} \geq V^* \\ min\left(\left(V_U^{(k-1)} + \gamma\right), V^*\right), & V^{(k-1)} < V^* \end{cases}, k = 2,3\cdots, n_{step} \qquad (8)$$

where $V^{(k-1)}$ is a total volume of the three-dimensional frame structure obtained after (k-1)-th iteration step, empirical parameter $\gamma$ is a step size parameter for volume variation limit, with a value of 0.005-0.035, and $n_{step}$ is a step of optimization iteration.

In an embodiment, in step 6, the sensitivity of the compliance with respect to the topology design variables are formulated as

$$\frac{\partial \Phi_{SMC}}{\partial \widetilde{x}_e} = \sum_{j=1}^{m} \left( -U_j^{T} \frac{\partial K}{\partial \widetilde{x}_e} U_j + 2U_j^{T} \frac{\partial F_j}{\partial \widetilde{x}_e} \right) \qquad (9)$$

$$\frac{\partial F_j}{\partial \widetilde{x}_e} = \frac{\partial \Gamma_j}{\partial \widetilde{x}_e} M\varphi_j Sa(T_j) + \Gamma_j \frac{\partial M}{\partial \widetilde{x}_e} \varphi_j Sa(T_j) + \Gamma_j M \frac{\partial \varphi_j}{\partial \widetilde{x}_e} Sa(T_j) \qquad (10);$$

and the sensitivity of the compliance with respect to the size design variables are formulated as

$$\frac{\partial \Phi_{SMC}}{\partial r_e} = \sum_{j=1}^{m} \left( -U_j^{T} \frac{\partial K}{\partial r_e} U_j + 2U_j^{T} \frac{\partial F_j}{\partial r_e} \right) \qquad (11)$$

$$\frac{\partial F_j}{\partial r_e} = \frac{\partial \Gamma_j}{\partial r_e} M\varphi_j Sa(T_j) + \Gamma_j \frac{\partial M}{\partial r_e} \varphi_j Sa(T_j) + \Gamma_j M \frac{\partial \varphi_j}{\partial r_e} Sa(T_j) \qquad (12).$$

In an embodiment, in step 7, the convergence criteria is expressed as

$$\left\|\Delta x_e\right\|_\infty < \varepsilon_1, \left\|\Delta F_j\right\|_2 < \varepsilon_2 \qquad (13).$$

In the second aspect, an electronic device according to the embodiment of the present application includes a processor, and a memory with a processor-executable program stored therein, and the processor-executable program is configured to be executed by the processor to implement the above method in the first aspect.

In a third aspect, the embodiment of the present application provides computer-readable storage medium with a computer program stored thereon, and the program or the instruction is configured to be executed by a processor to implement the above method in the first aspect.

In order to obtain a light-weight frame structural design considering anti-seismic performance requirements, the present application provides a topology optimization model in which the modal compliance under base excitations is taken as the objective and the volume constraints are applied. In the implementation of the present application, firstly, the ground structure without overlapping members is constructed by utilizing background finite element meshes and the collinear detection algorithm. Secondly, the node normalized variables are introduced to automatically identify the low-density region, and the pseudo mode identification and deleting measure based on the modal strain energy is used to overcome the pseudo mode issue. By using the above measure, the structural dynamic performance can be accurately captured and the optimization efficiency is improved. Thirdly, based on the sensitivity information, the defined topology optimization problem can be solved by using the gradient-based optimization algorithm, and the light-weight optimized design with anti-seismic performances is obtained, the main advantage of the proposed method is that not only the optimized beam layout can be obtained, but the beam size are also optimized.

**BRIEF DESCRIPTION OF THE DRAWINGS**

FIG. 1 illustrates an initial design domain and the corresponding ground structure of a three-dimensional frame structure according to Embodiment 1 of the present application.
FIG. 2 illustrates an optimized topology of a frame structure considering anti-seismic performance requirements according to Embodiment 1 of the present application.
FIG. 3 illustrates an iteration process curve of modal compliance and volume ratio of the frame structure according to Embodiment 1 of the present application.
FIG. 4 illustrates a structural frame diagram of an electronic device according to embodiments of the present application.
FIG. 5 illustrates a hardware structure diagram of an electronic device according to embodiments of the present application.

**DETAILED DESCRIPTION**

The technical solutions of embodiments of the present application will be further described more clearly and completely below in combination with the accompanying drawings in the embodiments of the present application. Obviously, the described embodiments are only a part of the embodiments of the present application, not all embodiments.
Based on the embodiments of the present application, all other embodiments obtained by those skilled in the technical field without a creative work are belong to the protection scope of the present application.
The terms of "first", "second" or the like in the description and claims of the present application are configured for distinguishing similar objects, not describing a specific order or sequence. It should be understood that, the data used in this way can be interchanged in a proper state, so that the embodiments of the present application can be implemented as other orders in addition to these orders illustrated or described below. Further, objects distinguished by "first", "second" or the like are usually a same object, and a number of the objects is not limited, for example, the first object can be one or more. In addition, "and/or" in the description and claims represents at least one of the connected objects, and the character of "/" generally represents that the associated objects have an "or" relationship.
With reference to the drawings, an integrate topology and size optimization method for a frame structure considering anti-seismic performance requirements according to embodiments of the present application will be further described below for specific embodiments and application scenarios.
The integrate topology and size optimization method for frame structure based on anti-seismic performance requirement according to an embodiment of the present application includes:

step 1, discretizing an initial three-dimensional design domain into hexahedral finite element meshes, and defining a beam member by defining connections between any two different nodes and collinearity detection algorithm to form a three-dimensional frame structure without an overlapping member;
step 2, assigning sectional parameters, material properties and boundary conditions to each beam element in the three-dimensional frame structure, and performing the modal analysis to obtain an initial natural frequency and a corresponding initial mode shape of the three-dimensional frame structure;
step 3, creating node normalized variables to define a low-density member during optimization of the three-dimensional frame structure, and performing a pseudo-modal recognition and a deleting measure based on a modal strain energy to obtain an actual natural frequency and an actual mode shape of the three-dimensional frame structure;
step 4, utilizing the actual natural frequency and the actual mode shape obtained above to obtain an equivalent modal force with considering branch mass;
step 5, performing quasi-static finite element analysis to the three-dimensional frame structure to obtain a modal displacement vector of the three-dimensional frame structure, constructing a topology optimization model of the three-dimensional frame structure with modal flexibility minimization as an objective function and meeting of volume constraint, and constructing an equivalent topology optimization model with an active volume constraint by combining a variant volume constraint solution;

step 6, analyzing sensitivity of topology and size design variable of the modal flexibility, and optimizing and solving a defined optimization issue with a moving asymptote optimization algorithm; and

step 7, repeating steps one to six until a convergence criteria is met, and obtaining an optimal solution to obtain an optimal topology layout of frame structure members with considering the anti-seismic performance requirement.

In the step 1, during discretizing the initial three-dimensional design domain to the hexahedral finite element meshes and defining the beam member by defining the connection between any two different nodes, if a new member with a starting point at node i must be conducted collinearity detection with a previously determined member with the starting point at node i, coming from the same node therewith, the new member has a direction vector of $D_{new}$, the previously determined member has a direction vector of $D_{old}$, and a dot product of the new member and the previously determined member can be calculated by the following formula (1):

$$C = D_{old} D_{new}^{\mathrm{T}} \qquad (1).$$

If the dot product of the new member and the previously determined member is equal to 1, it will be considered that the new member is collinear and cannot be used. A collinear tolerance *ColTol* < 1 is used during collinear determination, the new member will be removed when meeting the following collinear criterion formula:

$$C > ColTol \qquad (2).$$

However, the new member not meeting the following collinear criterion formula (2) is attached to the straight beam foundation structure with a new level, so that the three-dimensional frame structure without the overlapping member is formed by utilizing the above collinearity detection algorithm.

In step 2, the performing a modal analysis to obtain an initial natural frequency and a corresponding initial mode shape of the three-dimensional frame structure includes,

performing the modal analysis by considering an influence of structural branch quantity to obtain the initial natural frequency and the corresponding initial mode shape of the three-dimensional frame structure.

In step 3, the performing a pseudo-modal recognition and a deleting measure based on a modal strain energy to obtain an actual natural frequency and the actual mode shape of the three-dimensional frame structure includes,

performing the pseudo-modal recognition and the deleting measure based on a modal strain energy of a low-density region to obtain an actual natural frequency $\omega_j$ and an actual mode shape $\varphi_j$ in first $n_\omega$ orders of the three-dimensional frame structure, wherein *j = 1,2, ..., n(j)* .

In step 3, the creating node normalized variables to define a low-density member during optimization of the three-dimensional frame structure includes:

assigning a normalized variable $\chi_j$ for each node of the three-dimensional frame structure, and it can be represented as

$$\chi_j = \frac{\sum_{k \in \boldsymbol{nb}} x_k}{n_e \sum_{i=1}^{n_e} x_i} \qquad (3)$$

wherein, $\chi_j$ is a normalized variable for *j*-th node, $x_i$ is a topology variable for a i-th member of the three-dimensional frame structure, $n_e$ is a number of the member of the three-dimensional frame structure, *nb* is a set of members connected with the *j*-th node, and $x_k$ is a topology variable of k-th member in set *nb* . A threshold *t* is set, and if the

$$\chi_j < t \sum_{j=1}^{n} \chi_j$$

normalized variable for the *j*-th node meets           , the *j*-th node is defined as a low-density node.

the performing a pseudo-modal recognition and a deleting measure based on a modal strain energy to obtain an actual natural frequency and an actual mode shape of the three-dimensional frame structure includes,

identifying a mode with a ratio of the modal strain energy in the low-density region and a modal strain energy of a corresponding order greater than the threshold t as a pseudo-vibration mode, removing the pseudo-vibration mode during a optimization process to obtain the actual natural frequency $\omega_j$ and the actual mode shape $\varphi_j$ in the first $n_\omega$

orders of the three-dimensional frame structure, wherein $j = 1,2,\cdots,n_\omega$.

In step 4, the equivalent modal force $F_j(t)$ is represented as

$$F_j\left(t\right) = \Gamma_j M\boldsymbol{\varphi}_j Sa\left(T_j\right) \tag{4}$$

$$\Gamma_j = \frac{\boldsymbol{\varphi}_j^{\mathrm{T}} MI}{\boldsymbol{\varphi}_j^{\mathrm{T}} M\boldsymbol{\varphi}_j}$$

wherein, $j$ is $j$-th node, $M$ is an overall stiffness matrix of the three-dimensional frame structure,                 is a mass standardized modal participation factor, $Sa(T_j)$ is an seismic acceleration response spectrum corresponding

$T_j = \dfrac{2\pi}{\omega_j}$ , $I$ is a position vector at where the load is applied, and

$$\boldsymbol{I} = \left( \underbrace{\begin{matrix} 1 & 0 & 0 & 0 & 0 & 0 \end{matrix}}_{u_i \quad v_i \quad w_i \quad \theta_{xi} \quad \theta_{yi} \quad \theta_{zi}} \cdots \underbrace{\begin{matrix} 1 & 0 & 0 & 0 & 0 & 0 \end{matrix}}_{u_j \quad v_j \quad w_j \quad \theta_{xj} \quad \theta_{yj} \quad \theta_{zj}} \right)^{\mathrm{T}}$$

, wherein $u_i$, $v_i$ and $w_i$ are displacements of an i-th node along $x$, $y$ and $z$ directions, respectively, and $u_j$, $v_j$ and $w_j$ are displacements of a $j$-th node along $x$, $y$ and $z$ directions, respectively; $\theta_{xi}$, $\theta_{yi}$, $\theta_{zi}$, $\theta_{xj}$, $\theta_{yj}$ and $\theta_{zj}$ correspond to rotation angles around x, y, and z axes, respectively; and $T$ is a matrix transpose operator.

In step 5, the performing quasi-static finite element analysis on the three-dimensional frame structure to obtain the modal displacement vector of the three-dimensional frame structure includes,

performing the quasi-static finite element analysis on the three-dimensional frame structure by utilizing the equivalent modal force $F_j(t)$ to obtain the modal displacement vector $U_j = K^{-1}F_j$, $j = 1,2,\cdots,n_\omega$ of the three-dimensional frame structure, wherein $K$ is an overall stiffness matrix of the three-dimensional frame structure;

modal flexibility contributed by the first $n_\omega$ orders is represented as

$$\Phi_{\mathrm{SMC}} = \sum_{j=1}^{n_\omega} F_j^{\mathrm{T}} U_j \tag{5};$$

the equivalent topology optimization model is represented as

$$\begin{cases} \text{find} \quad \boldsymbol{x} = \left[ x_1, x_2, \ldots \quad x_{n_e} \right]^{\mathrm{T}}, \boldsymbol{r} = \left[ r_1, r_2, \ldots \quad r_{n_e} \right]^{\mathrm{T}} \\[2mm] \min_{\mathrm{x}} \quad \Phi_{\mathrm{SMC}}\left(\boldsymbol{x},\boldsymbol{r}\right) = \sum_{j=1}^{n_e} F_j^{\mathrm{T}}\left(\tilde{x},\boldsymbol{r}\right) U_j\left(\tilde{x},\boldsymbol{r}\right) \\[2mm] s.t. \quad \left(\boldsymbol{K} - \omega_j^2 \boldsymbol{M}\right)\boldsymbol{\varphi}_j = 0 \\[2mm] V_1\left(\boldsymbol{x}\right) = \sum_{e=1}^{n_e} f_v(\tilde{x}_e)\, v_e(r_e)/V^{(0)} - V_U^{(k)} \le 0 \\[2mm] V_2\left(\boldsymbol{x}\right) = -\sum_{e=1}^{n_e} f_v(\tilde{x}_e)\, v_e(r_e)/V^{(0)} + \left(1-\theta\right)V_U^{(k)} \le 0 \\[2mm] 0 < x_{\min} \le x_e \le 1, r_{\min} \le x_e \le r_{\max} \end{cases} \tag{6}$$

where $x = [x_1, x_2, \ldots x_{ne}]^T$ and $r = [r_1, r_2, \ldots r_{ne}]^T$ are the topology and size design variable vector of the three-dimensional frame structure, respectively, $\tilde{x}$ is a physical variable after Heaviside mapping, and $n_e$ is a number of the beam element in the three-dimensional frame structure; $\theta$ is a volume constraint relaxation parameter and $\theta = 0.004$, $V^{(0)}$ is a structural total volume of the three-dimensional frame structure before optimization, and $V_U^{(k)}$ is a target structural volume fraction limit for k-th iteration step, which is represented as

$$V_U^{(k)} = \begin{cases} V^{(k-1)} - \min\left(\gamma, \left|V^* - V^{(k-1)}\right|\right), & V^{(k-1)} \geq V^* \\ V^{(k-1)} + \min\left(\gamma, \left|V^* - V^{(k-1)}\right|\right), & V^{(k-1)} < V^* \end{cases}, k = 1 \text{ or } k \in B \qquad (7)$$

$$V_U^{(k)} = \begin{cases} max\left(\left(V_U^{(k-1)} - \gamma\right), V^*\right), & V^{(k-1)} \geq V^* \\ min\left(\left(V_U^{(k-1)} + \gamma\right), V^*\right), & V^{(k-1)} < V^* \end{cases}, k = 2, 3 \cdots, n_{step} \qquad (8)$$

wherein, $V^{(k-1)}$ is a total volume of the three-dimensional frame structure obtained after (k-1)-th iteration step, empirical parameter $\gamma$ is a step size parameter for volume variation limit, satisfying 0.005-0.035, and $n_{step}$ is a step of optimization iteration.

In step 6, the sensitivity of topology design variables is represented as

$$\frac{\partial \Phi_{SMC}}{\partial \tilde{x}_e} = \sum_{j=1}^{m} \left( -U_j^T \frac{\partial K}{\partial \tilde{x}_e} U_j + 2U_j^T \frac{\partial F_j}{\partial \tilde{x}_e} \right) \qquad (9)$$

$$\frac{\partial F_j}{\partial \tilde{x}_e} = \frac{\partial \Gamma_j}{\partial \tilde{x}_e} M\varphi_j Sa(T_j) + \Gamma_j \frac{\partial M}{\partial \tilde{x}_e} \varphi_j Sa(T_j) + \Gamma_j M \frac{\partial \varphi_j}{\partial \tilde{x}_e} Sa(T_j) \qquad (10);$$

the sensitivity of size design variables is represented as

$$\frac{\partial \Phi_{SMC}}{\partial r_e} = \sum_{j=1}^{m} \left( -U_j^T \frac{\partial K}{\partial r_e} U_j + 2U_j^T \frac{\partial F_j}{\partial r_e} \right) \qquad (11)$$

$$\frac{\partial F_j}{\partial r_e} = \frac{\partial \Gamma_j}{\partial r_e} M\varphi_j Sa(T_j) + \Gamma_j \frac{\partial M}{\partial r_e} \varphi_j Sa(T_j) + \Gamma_j M \frac{\partial \varphi_j}{\partial r_e} Sa(T_j) \qquad (12).$$

In step 7, the convergence criteria are represented as

$$\left\|\Delta x_e\right\|_\infty < \varepsilon_1, \quad \left\|\Delta F_j\right\|_2 < \varepsilon_2 \qquad (13).$$

The present application will be further described below in combination with an integrate topology and size optimization method for a frame structure considering anti-seismic performance requirements provided in Embodiment 1 of the present application.

Embodiment 1

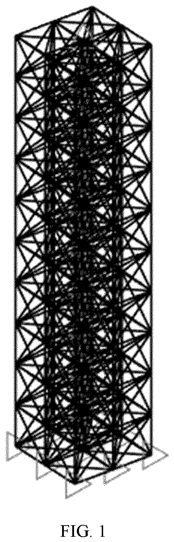

FIG. 1 provides an initial design domain and a base structure of a three-dimensional frame structure, with size of 16m×16m×80m. In particular, the boundary condition of the three-dimensional frame structure was bottom fixed support, beam-column element at the center of the three-dimensional frame structure did not participate the design, and a branch mass was $4.53×10^8$ kg and the branch was distributed longitudinally at the centerline of the structure. The beam element in the three-dimensional frame structure had a circular cross-section, whose diameter $r$ was equal to 0.4m. The material properties were configured as that, an elastic modulus E = 200Gpa, Poisson's ratio $\mu$ = 0.3, and density $\rho$ = 7850kg/m$^3$. A convergence condition was configured as $\varepsilon_1$ = 0.01 and $\varepsilon_2$ = 0.05 .

A seismic acceleration response spectrum in Embodiment 1 was configured as

$$Sa(T_j) = \begin{cases} 1.5\text{g} & T_j \leq 0.6\text{s} \\ 0.9\text{g}/T_j & T_j > 0.6\text{s} \end{cases} \tag{9}$$

wherein, g was gravitational acceleration.

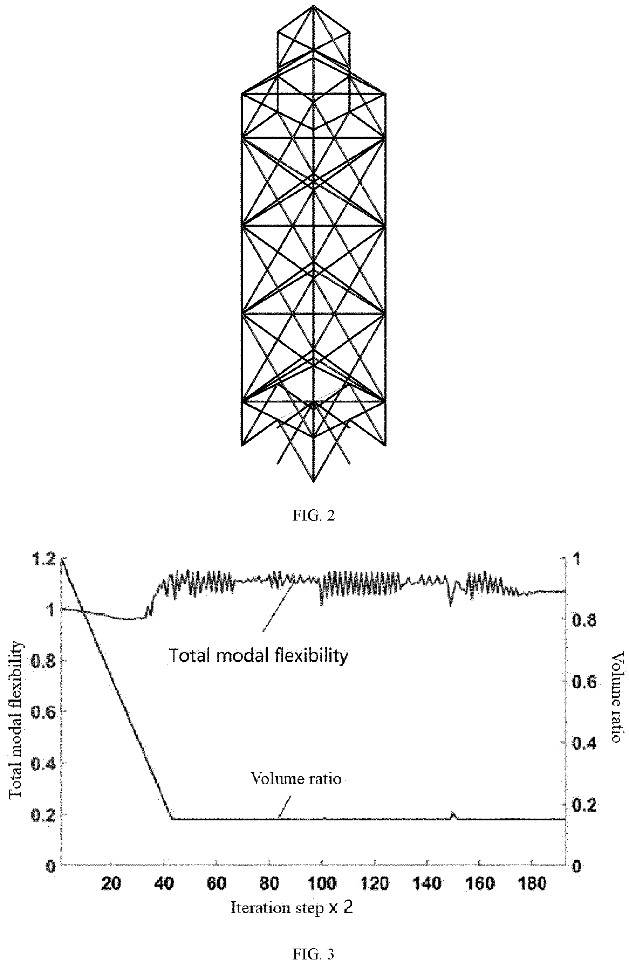

The modal smoothness of the three-dimensional frame structure shown as the formula (2) was formed by considering contributions of the first 20 orders, a target volume value $V^*$ of the structure was set as 0.15, an optimization model shown as the formula (3) was constructed, the three-dimensional frame structure was conducted an anti-seismic optimization design by adopting the technical solution of the present application, so as to obtain the integrate topology and size optimization method for a frame structure considering anti-seismic performance requirements shown as FIG.2. It can be known from FIG.2, an anti-seismic structure was symmetrical towards the center along the central core axis, wherein top lateral supports were arranged alternately between corner and center, a main part was configured as providing angular support from four corners to the middle core, and four sidewalls formed a uniformly distributed X-shaped support structure along the height of the building. While an iteration process curve of modal compliance and volume ratio of the frame structure was shown in FIG.3, as can be known that, there was a stable convergence during optimization, and the modal flexibility of the structure was well controlled.

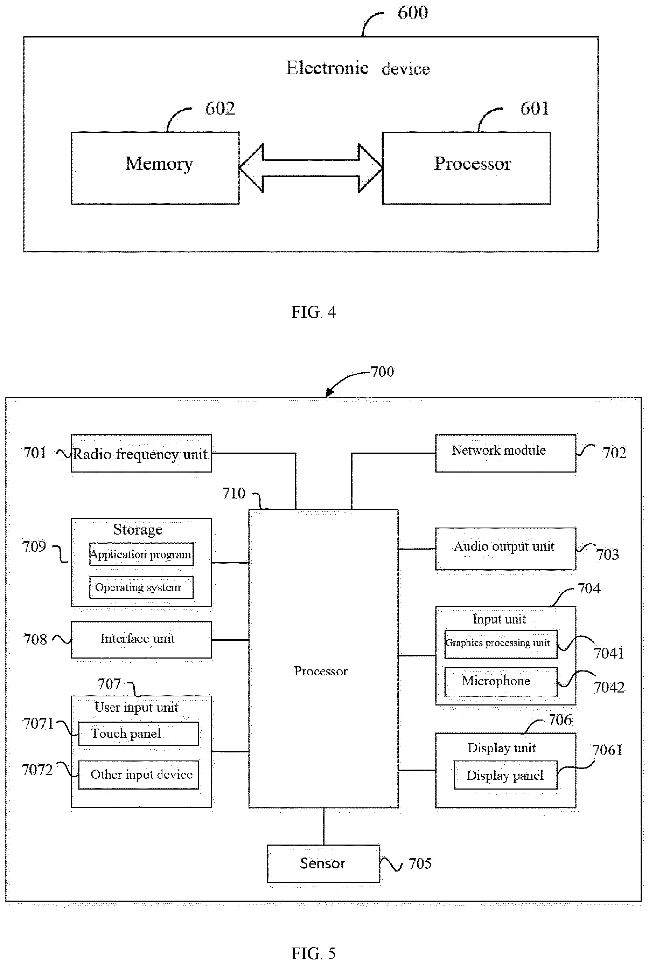

As shown in FIG.4, an electronic device 600 according to an embodiment of the present application includes a processor 601, a memory 602 with a processor-executable program stored therein, and the processor-executable program is configured to be executed by the processor 601 to produce all steps of the embodiments of the above integrate topology and size optimization method for a frame structure considering anti-seismic performance requirements, which further obtains same technical effect, and it will not be further described here to avoid repetition.

It needs to be illustrated, a first electronic device in the embodiments of the present application includes the above movable electronic device and non-movable electronic device.

FIG. 5 is a hardware structure diagram of an electronic device to implement the embodiments of the present application.

The electronic device 700 includes but not limit to a radio frequency unit 701, a Network module 702, an audio output unit 703, an input unit 704, a sensor 705, a display unit 706, a user input unit 707, an interface unit 708, a storage 709 and a processor 710 and the like.

Those skilled in the related art can understand that, the electronic device 700 further includes a power supply supplying power to each member (for example, a battery), the power supply can be logically connected with the processor 710 via a power management system, thereby implementing functions of charging, discharging and power consumption management and the like through the power management system. The electronic device illustrated in FIG. 5 does not limit the electronic device, which can include more or fewer members than that shown in FIG. 5, or different combinations of members, or different arrangements of members, and it will not be further described here.

It should be understood that, in the embodiments of the present application, the input unit 704 can include a Graphics Processing Unit (GPU) 7041 and a microphone 7042, the Graphics Processing Unit 7041 produces image data of static picture or video obtained by an image capture device (for example, a camera) in a video capture mode or an image capture mode. The display unit 706 can include a display panel 7061, which can be configured by a liquid crystal display, an organic light emitting diode or the like. The user input unit 707 includes a touch panel 7071 and an input device 7072. The touch panel 7071 is also known as touch screen. The touch panel 7071 can include two parts of a touch detection device and a touch controller. The input device 7072 can include but not limit to a physical keyboard, a function key (for example, a volume control button, a switch button or the like), a trackball, a mouse and an action bar, and it will not be further described here. The storage 709 can be configured for storing software program and various types of data, which includes but not limit to an application program and an operating system. The processor 710 can integrate an application processor and a modem processor, wherein the application processor mainly produces the operating system, a user interface, the application program and the like, and the modem processor mainly produces wireless communication. It should be understood that, the above modem processor also cannot be integrated in the processor 710.

An embodiment of the present application further provides a readable storage medium, the readable storage medium stores a program or an instruction, and the program or the instruction are executed by the processor to conduct all steps of the embodiments of the integrate topology and size optimization method for a frame structure considering anti-seismic performance requirements, which can obtain a same technical effect, and it will not be further described here to avoid repetition.

In particular, the processor is the processor of the electronic device in the above embodiments. The readable storage medium includes computer-readable storage media, such as Read-Only Memory (ROM), Random Access Memory (RAM), a hard disk, an optical disc or the like.

An embodiment of the present application further provides a chip, the chip includes a processor and a communication interface coupled with the processor, the processor is configured for executing program or instruction to conduct all steps of the embodiments of the integrate topology and size optimization method for a frame structure considering anti-seismic performance requirements, which can obtain a same technical effect, and it will not be further described here to avoid repetition.

It should be understood that, the chip mentioned in the embodiments of the present application also can be known as a system-level chip, a system chip, a chip system, a system-on-chip or the like.

It needs to be illustrated that, in the present application, the term of "include", "contain" or its other variants mean cover non-exclusive inclusion, therefore, the progress, method, object or device including a series of elements not only include these elements, but also other elements not clearly listed, or the inherent elements of the progress, method, object or device. In the absence of further restrictions, elements limited by phrase "including one..." do not exclude the possibility of other identical elements in the process, method, object, or device that includes the above element. In particular, it needs to be noted that, the scope of the method and device in the embodiment of the present application is not limited to execute function via the illustrated or discussed order, and also via almost simultaneous approach or contrary order depended on related function, for example, the illustrated method can be executed via different order from the illustrated order, and various steps can also be added, omitted, or combined. In addition, the described features in some embodiments can be combined in other embodiments.

Through the above description of the above embodiments, those skilled in the related field can clearly understand that the above method in embodiment can be conducted via combing software and a necessary generic hardware platform, and also can only via the hardware platform, however, the former is better embodiment in many cases. Based on the above understand, in the technical solution of the present application, actually, a part having contributions to the related art can be illustrated as forms of software products, computer software products are stored in a storage medium (for example, ROM/RAM, the hard disk and the optical disc), also include a plurality of instructions, so that the illustrated methods in embodiments of the present application can be executed via a terminal (it can be phone, computer, server, air conditioner, network equipment or the like).

The embodiments of the present application are further described in the above, however, the present application is not limited to the above specific embodiments, which are only illustrative, not restrictive. Under the enlightenment of the present application, more various forms made by those skilled in the technical field in the case of the purpose of the present application and the scope protected by claims should be covered within the protection scope of the present application.

**Claims**

1. An integrate topology and size optimization method for a frame structure considering anti-seismic performance requirements, **characterized by** comprising:

   step 1, discretizing an initial three-dimensional design domain to hexahedral finite element meshes, and defining a beam member by defining a connection between any two different nodes and collinearity detection algorithm to form a three-dimensional frame structure without an overlapping member;
   step 2, assigning sectional parameters, material properties and boundary conditions to each of beam elements in the three-dimensional frame structure, and performing a modal analysis to obtain an initial natural frequency and a corresponding initial mode shape of the three-dimensional frame structure;
   step 3, creating node normalized variables to define a low-density member during optimization of the three-dimensional frame structure, and performing a pseudo-modal recognition and a deleting measure based on a modal strain energy to obtain an actual natural frequency and an actual mode shape of the three-dimensional frame structure; wherein, the step 3 comprises:

assigning a normalized variable $\chi_j$ for each node of the three-dimensional frame structure, which is represented as

$$\chi_j = \frac{\sum_{k \in \boldsymbol{nb}} x_k}{n_e \sum_{i=1}^{n_e} x_i} \qquad (3)$$

wherein, $\chi_j$ is a normalized variable for a $j$-th node, $x_i$ is a topology variable for a i-th member of the three-dimensional frame structure, $n_e$ is number of members of the three-dimensional frame structure, $\boldsymbol{nb}$ is a set of members connected with the $j$-th node, and $x_k$ is a topology variable of a k-th member in the set $\boldsymbol{nb}$ ;

a threshold $t$ is set such that, if the normalized variable for the $j$-th node meets $\chi_j < t\sum_{j=1}^{n}\chi_j$ , the $j$-th node is defined as a low-density node; and

performing the pseudo-modal recognition and the deleting measure based on a modal strain energy of a low-density region to obtain an actual natural frequency $\omega_j$ and an actual mode shape $\varphi_j$ in first $n_\omega$ orders of the three-dimensional frame structure, wherein $j = 1,2,\cdots,n_\omega$; identifying a mode with a ratio of the modal strain energy in the low-density region and a modal strain energy of a corresponding order greater than the threshold t as a pseudo-vibration mode, and removing the pseudo-vibration mode during a optimization process to obtain the actual natural frequency $\omega_j$ and the actual mode shape $\varphi_j$ in the first $n_\omega$ orders of the three-dimensional frame structure;

step 4, utilizing the actual natural frequency and the actual mode shape obtained above to obtain an equivalent modal force with considering branch mass;

step 5, performing quasi-static finite element analysis on the three-dimensional frame structure to obtain a modal displacement vector of the three-dimensional frame structure, constructing a topology optimization model of the three-dimensional frame structure with modal flexibility minimization as an objective function and meeting of volume constraint, and constructing an equivalent topology optimization model with an active volume constraint by combining a variant volume constraint solution;

step 6, analyzing sensitivity of topology and size design variables of the modal flexibility, and optimizing and solving a defined optimization issue with a moving asymptote optimization algorithm; and

step 7, repeating steps 1 to 6 until a convergence criteria is met, and obtaining an optimal solution to obtain an optimal topology layout of frame structure members with considering the anti-seismic performance requirement.

2. The method according to claim 1, **characterized in that**, in step 1, the discretizing an initial three-dimensional design domain to hexahedral finite element meshes, and defining a beam member by defining a connection between any two different nodes and collinearity detection algorithm comprises:

performing a collinearity detection on a new member with a starting point at a node i and a previously determined member with a starting point at the node i coming from a same node, wherein, the new member has a direction vector of $D_{new}$, the previously determined member has a direction vector of $D_{old}$, and a dot product of the new member and the previously determined member is calculated with a following formula (1):

$$C = D_{old} D_{new}^{T} \qquad (1)$$

if the dot product of the new member and the previously determined member is equal to 1, determining that the new member is collinear with the previously determined member and abandoning the new member; wherein, in the determining of collinear, a collinear tolerance $ColTol < 1$ is used, and the new member is removed if a following collinear criterion formula (2) is met:

$$C > ColTol \qquad (2)$$

and, adding the new member that does not meet the collinear criterion formula (2) to a new level of a straight beam foundation structure with.

3. The method according to claim 2, **characterized in that**, in step 4, the equivalent modal force $F_j(t)$ is represented as

$$F_j(t) = \Gamma_j M \varphi_j Sa(T_j) \qquad (4)$$

wherein, $j$ is $j$-th order modal, $M$ is an overall stiffness matrix of the three-dimensional frame structure,

$$\Gamma_j = \frac{\varphi_j^{\mathrm{T}} M I}{\varphi_j^{\mathrm{T}} M \varphi_j}$$

is a mass standardized modal participation factor, $Sa(T_j)$ is an seismic acceleration response

$$T_j = \frac{2\pi}{\omega_j}$$

spectrum corresponding to , $I$ is a position vector of load, and

$$I = \left( \underbrace{\begin{matrix} 1 & 0 & 0 \\ u_i & v_i & w_i \end{matrix}}_{} \underbrace{\begin{matrix} 0 & 0 & 0 \\ \theta_{xi} & \theta_{yi} & \theta_{zi} \end{matrix}}_{} \cdots \underbrace{\begin{matrix} 1 & 0 & 0 \\ u_j & v_j & w_j \end{matrix}}_{} \underbrace{\begin{matrix} 0 & 0 & 0 \\ \theta_{xj} & \theta_{yj} & \theta_{zj} \end{matrix}}_{} \right)^{\mathrm{T}}$$

, wherein $u_i$, $v_i$ and $w_i$ are displacements of an i-th node along $x$, $y$ and $z$ directions respectively, and $u_j$, $v_j$ and $w_j$ are displacements of aj-th node along $x$, $y$ and $z$ directions of respectively; $\theta_{xi}$, $\theta_{yi}$, $\theta_{zi}$, $\theta_{xj}$, $\theta_{yj}$ and $\theta_{zj}$ correspond to rotation angles around x, y, and z axes respectively; and $T$ is a matrix transpose operator.

4. The method according to claim 3, **characterized in that**, in step 5, the performing quasi-static finite element analysis on the three-dimensional frame structure to obtain the modal displacement vector of the three-dimensional frame structure comprises:

performing the quasi-static finite element analysis on the three-dimensional frame structure by utilizing the equivalent modal force $F_j(t)$ to obtain the modal displacement vector $U_j = K^{-1}F_j$, $j = 1,2,\cdots,n_\omega$ of the three-dimensional frame structure, wherein $K$ is an overall stiffness matrix of the three-dimensional frame structure; modal flexibility contributed by first $n_\omega$ orders of modals is represented as

$$\Phi_{\mathrm{SMC}} = \sum_{j=1}^{n_\omega} F_j^{\mathrm{T}} U_j \qquad (5);$$

the equivalent topology optimization model is represented as

$$\begin{cases} \text{find} \quad \boldsymbol{x} = \begin{bmatrix} x_1, x_2, \dots & x_{n_e} \end{bmatrix}^{\mathrm{T}}, \boldsymbol{r} = \begin{bmatrix} r_1, r_2, \dots & r_{n_e} \end{bmatrix}^{\mathrm{T}} \\ \underset{\mathrm{x}}{\min} \quad \Phi_{\mathrm{SMC}}(\boldsymbol{x}, \boldsymbol{r}) = \sum_{j=1}^{n_e} \boldsymbol{F}_j^{\mathrm{T}}(\tilde{\boldsymbol{x}}, \boldsymbol{r}) U_j(\tilde{\boldsymbol{x}}, \boldsymbol{r}) \\ s.t. \quad \left( \boldsymbol{K} - \omega_j^2 \boldsymbol{M} \right) \boldsymbol{\varphi}_j = 0 \\ V_1(\boldsymbol{x}) = \sum_{e=1}^{n_e} f_v(\tilde{x}_e) \, v_e(r_e) / V^{(0)} - V_U^{(k)} \leq 0 \\ V_2(\boldsymbol{x}) = -\sum_{e=1}^{n_e} f_v(\tilde{x}_e) \, v_e(r_e) / V^{(0)} + (1-\theta) V_U^{(k)} \leq 0 \\ 0 < x_{\min} \leq x_e \leq 1, r_{\min} \leq x_e \leq r_{\max} \end{cases} \tag{6}$$

wherein, $\boldsymbol{x} = [x_1, x_2, \dots x_{ne}]^{\mathrm{T}}$ and $\boldsymbol{r} = [r_1, r_2, \dots r_{ne}]^{\mathrm{T}}$ are topology and size design variable vectors of the three-dimensional frame structure respectively, $\tilde{\boldsymbol{x}}$ is a physical variable after Heaviside mapping, and $n_e$ is number of the beam element in the structure; $\theta$ is a volume constraint relaxation parameter and $\theta = 0.004$, $V^{(0)}$ is a structural total volume of the three-dimensional frame structure before optimization, $V_U^{(k)}$ is a target structural volume fraction limit for a k-th iteration step, and $V_U^{(k)}$ is represented as

$$V_U^{(k)} = \begin{cases} V^{(k-1)} - \min\left(\gamma, \left| V^* - V^{(k-1)} \right| \right), & V^{(k-1)} \geq V^* \\ V^{(k-1)} + \min\left(\gamma, \left| V^* - V^{(k-1)} \right| \right), & V^{(k-1)} < V^* \end{cases}, k = 1 \text{ or } k \in B \tag{7}$$

$$V_U^{(k)} = \begin{cases} max\left( \left( V_U^{(k-1)} - \gamma \right), V^* \right), & V^{(k-1)} \geq V^* \\ min\left( \left( V_U^{(k-1)} + \gamma \right), V^* \right), & V^{(k-1)} < V^* \end{cases}, k = 2, 3 \cdots, n_{step} \tag{8}$$

wherein, $V^{(k-1)}$ is a total volume of the three-dimensional frame structure obtained after (k-1)-th iteration step, empirical parameter $\gamma$ is a step size parameter for volume variation limit, with a value of 0.005~0.035, and $n_{step}$ is a step of optimization iteration.

5. The method according to claim 4, **characterized in that**, in step 6, the sensitivity of topology design variables is represented as

$$\frac{\partial \Phi_{\mathrm{SMC}}}{\partial \tilde{x}_e} = \sum_{j=1}^{\mathrm{m}} \left( -U_j^{\mathrm{T}} \frac{\partial \boldsymbol{K}}{\partial \tilde{x}_e} U_j + 2U_j^{\mathrm{T}} \frac{\partial \boldsymbol{F}_j}{\partial \tilde{x}_e} \right) \tag{9}$$

$$\frac{\partial \boldsymbol{F}_j}{\partial \tilde{x}_e} = \frac{\partial \Gamma_j}{\partial \tilde{x}_e} \boldsymbol{M} \boldsymbol{\varphi}_j Sa(T_j) + \Gamma_j \frac{\partial \boldsymbol{M}}{\partial \tilde{x}_e} \boldsymbol{\varphi}_j Sa(T_j) + \Gamma_j \boldsymbol{M} \frac{\partial \boldsymbol{\varphi}_j}{\partial \tilde{x}_e} Sa(T_j) \tag{10}$$

the sensitivity of size design variables is represented as

$$\frac{\partial \Phi_{\text{SMC}}}{\partial r_e} = \sum_{j=1}^{m} \left( -U_j^{\text{T}} \frac{\partial K}{\partial r_e} U_j + 2U_j^{\text{T}} \frac{\partial F_j}{\partial r_e} \right) \qquad (11)$$

$$\frac{\partial \mathbf{F}_j}{\partial r_e} = \frac{\partial \Gamma_j}{\partial r_e} \mathbf{M}\boldsymbol{\varphi}_j Sa(T_j) + \Gamma_j \frac{\partial \mathbf{M}}{\partial r_e} \boldsymbol{\varphi}_j Sa(T_j) + \Gamma_j \mathbf{M} \frac{\partial \boldsymbol{\varphi}_j}{\partial r_e} Sa(T_j) \qquad (12).$$

6. The method according to claim 5, **characterized in that**, in step 7, the convergence criteria is represented as

$$\|\Delta x_e\|_{\infty} < \varepsilon_1, \|\Delta F_j\|_2 < \varepsilon_2 \qquad (13).$$

7. An electronic device, comprising: a processor, and a memory with a processor-executable program stored therein, **characterized in that**, the processor-executable program is configured to be executed by a processor to implement the method according to one of claims 1-6.

8. A computer-readable storage medium with a computer program stored thereon, **characterized in that**, the computer program is configured to be executed by a processor to implement the method according to one of claims 1-6.

FIG. 1

FIG. 2

FIG. 3

600

Electronic device

602 601

Memory ⟷ Processor

FIG. 4

700

701 Radio frequency unit

Network module 702

710

Storage
709 Application program

Operating system

Audio output unit 703

704
Input unit
Graphics processing unit 7041

Microphone 7042

708 Interface unit

707
User input unit
7071 Touch panel

7072 Other input device

Processor

706
Display unit 7061
Display panel

Sensor 705

FIG. 5

**EP 4 435 658 A1**

Europäisches Patentamt
European Patent Office
Office européen des brevets

# EUROPEAN SEARCH REPORT

**Application Number**

EP 24 16 2017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SOTIROPOULOS STEFANOS ET AL: "Optimum topological bracing design of tall steel frames subjected to dynamic loading", COMPUTERS AND STRUCTURES, PERGAMON PRESS, GB, vol. 259, 8 November 2021 (2021-11-08), XP086878486, ISSN: 0045-7949, DOI: 10.1016/J.COMPSTRUC.2021.106705 [retrieved on 2021-11-08] * abstract * * page 2, second column, first paragraph * * page 3, first column, first paragraph * * page 2, first column, last paragraph * * page 6, section 5.1, first paragraph * * figures 1, 2, 3a, 16, 17 * * page 6, sections 5.2, 5.3 * * equations 36-39, 42-45 * * the whole document *<br>- - - - -<br>-/-- | 1-8 | INV.<br>G06F30/13<br>G06F30/17<br>G06F30/23<br>G06F111/04<br>G06F111/10<br>G06F119/14 |
|  |  |  | **TECHNICAL FIELDS SEARCHED (IPC)**<br><br>G06F |

The present search report has been drawn up for all claims

| Place of search | Date of completion of the search | Examiner |
|---|---|---|
| Munich | 12 July 2024 | Joris, Pierre |

page 1 of 3

Europäisches
Patentamt

European
Patent Office

Office européen
des brevets

## EUROPEAN SEARCH REPORT

**Application Number**

EP 24 16 2017

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHAO LEI ET AL: "Topology optimization of frame structures with stress and stability constraints", STRUCTURAL AND MULTIDISCIPLINARY OPTIMIZATION, SPRINGER BERLIN HEIDELBERG, BERLIN/HEIDELBERG, vol. 65, no. 9, 1 September 2022 (2022-09-01), XP037932361, ISSN: 1615-147X, DOI: 10.1007/S00158-022-03361-3 [retrieved on 2022-09-13] * abstract * * figures 3-5, 14-17 * * page 2, first column, second paragraph * * page 3, first column, second paragraph * * page 6, section 4 * * equations 14-19 * * the whole document * | 1-8 | |
| A | MARTIN AMORY ET AL: "Structural topology optimization of tall buildings for dynamic seismic excitation using modal decomposition", ENGINEERING STRUCTURES, ELSEVIER, AMSTERDAM, NL, vol. 216, 16 May 2020 (2020-05-16), XP086155569, ISSN: 0141-0296, DOI: 10.1016/J.ENGSTRUCT.2020.110717 [retrieved on 2020-05-16] * abstract * * sections 1.2, 2, 3-4.2 * * figures 1, 2, 4, 5, 9 * * the whole document * | 1-8 | TECHNICAL FIELDS SEARCHED (IPC) |

-/--

The present search report has been drawn up for all claims

| Place of search | Date of completion of the search | Examiner |
|---|---|---|
| Munich | 12 July 2024 | Joris, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZEGARD TOMÁS ET AL: "GRAND - Ground structure based topology optimization for arbitrary 2D domains using MATLAB", STRUCTURAL AND MULTIDISCIPLINARY OPTIMIZATION, vol. 50, no. 5, 22 June 2014 (2014-06-22), pages 861-882, XP093184680, Berlin/Heidelberg ISSN: 1615-147X, DOI: 10.1007/s00158-014-1085-z Retrieved from the Internet: URL:http://link.springer.com/article/10.10 07/s00158-014-1085-z/fulltext.html> [retrieved on 2024-07-11] * sections 3.2, 3.3 * * figures 2, 3, 6 * * the whole document * | 1,2,7,8 | |

- - - - -

TECHNICAL FIELDS
SEARCHED       (IPC)

The present search report has been drawn up for all claims

| Place of search | Date of completion of the search | Examiner |
|---|---|---|
| Munich | 12 July 2024 | Joris, Pierre |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)